# FASCICULE DE BREVET EUROPEEN

(11) **EP 0 648 459 B1**
(45) Date de publication et mention de la délivrance du brevet: **13.05.1998**
(21) Numéro de dépôt: 94402297.9
(22) Date de dépôt: 12.10.1994
(51) Int. Cl.: A47J 36/02

(54) **Récipient de cuisson à déformation de fond maitrisée**
Kochtopf mit beherrschter Verformung des Topfbodens
Cooking vessel with controlled deformation of the bottom

(30) Priorité: 13.10.1993 FR 9312196; 15.02.1994 FR 9401710
(43) Date de publication de la demande: 19.04.1995
(73) Titulaire: SEB S.A., 69130 Ecully (FR)
(72) Inventeur: Coudurier, Alain, F-73410 Albens (FR); Brasset, Jean-François, F-74960 Cran Gevrier (FR); Coissard, Georges, F-74150 Val de Fier (FR); Maillard, Philippe, F-74150 Moye (FR)
(74) Mandataire: Keib, Gérard

(56) Documents cités:
- EP-A- 0 175 462
- EP-A- 0 509 860
- CH-A- 237 166
- DE-C- 552 901
- FR-A- 2 693 093
- GB-A- 410 237

## Description

La présente invention concerne un récipient de cuisson dont la déformation du fond est maîtrisée sous l'effet de la chaleur et des variations brutales de température qu'il subit en cours d'utilisation.

Les récipients de cuisson sont généralement réalisés à partir d'une feuille en aluminium emboutie.

Lors du chauffage, la surface du fond du récipient, en contact avec une plaque de cuisson ou un brûleur est exposée à une température nettement plus élevée que la surface intérieure dudit fond.

Il en résulte une dilatation thermique se traduisant par un bombage du fond du récipient.

Pour éviter ce phénomène nuisible, on donne au fond du récipient une légère concavité, de sorte que lors du chauffage, ce fond devient, sous l'effet de la dilatation sensiblement plan. Lors du refroidissement, le fond retrouve théoriquement sa concavité.

Cependant l'expérience montre qu'au bout d'un certain nombre de cycles répétés de chauffage et de refroidissement, la concavité du fond du récipient diminuait, puis devenait nulle et en fin de compte le fond devenait bombé, le récipient devenant ainsi pratiquement inutilisable.

Ce résultat s'explique par les caractéristiques de l'aluminium.

Au cours des cycles répétés de chauffage et de refroidissement, le domaine élastique est dépassé et il en résulte une déformation irréversible.

Le but de la présente invention est d'éviter la déformation irréversible du fond des récipients de cuisson réalisés à partir d'une feuille en métal ou alliage léger tel que l'aluminium.

L'invention vise ainsi un récipient de cuisson réalisé à partir d'une feuille de métal ou d'alliage léger emboutie, comportant un fond destiné à être disposé sur une plaque de cuisson, un brûleur ou analogue, ce fond étant légèrement concave.

Suivant l'invention, ce récipient de cuisson est caractérisé en ce que ledit fond comporte une plaque éventuellement composée de plusieurs éléments, centrée ne recouvrant qu'une portion réduite de ce dernier, en un métal ou alliage ayant des caractéristiques mécaniques, thermiques et physiques différentes de celles du métal ou alliage de ladite feuille, cette plaque étant encastrée dans ledit fond. Cet encastrement peut être partiel ou total.

Grâce à cette plaque encastrée dans la zone localisée du fond du récipient et ayant des propriétés mécaniques, thermiques et physiques différentes de celles du métal ou alliage constituant le reste du récipient, on empêche toute déformation irréversible du fond du récipient même après un très grand nombre de cycles répétés de chauffage et de refroidissement.

Les essais ont montré qu'il était important que la plaque ci-dessus ne soit encastrée que sur une portion réduite de la surface du fond.

De préférence, la concavité dudit fond est telle que lorsqu'il est disposé sur une plaque de cuisson, la surface portante du fond située autour de la plaque ayant des propriétés mécaniques thermiques et physiques différentes touche la plaque de cuisson, tandis que la plaque précitée ne touche pas la plaque de cuisson.

La concavité est réalisée lors de l'emboutissage du disque en métal ou alliage léger sur lequel on a préalablement encastré totalement ou partiellement ladite plaque.

Le métal ou alliage du récipient sera généralement à base d'aluminium et la plaque partiellement ou totalement encastrée dans le fond sera généralement en acier et de préférence en acier inoxydable.

De préférence, ladite plaque recouvre entre 5 et 30% de la surface du fond.

Une gorge est éventuellement ménagée à la périphérie de la plaque.

De préférence, la plaque présente des trous et est partiellement encastrée dans le fond de telle sorte que le métal dudit fond remplit totalement lesdits trous. Les encastrements ainsi réalisés laissent la plaque en légère surépaisseur par rapport à la surface du fond.

L'encastrement de cette plaque dans le métal du fond du récipient peut être réalisé par frappe à froid comme décrit dans la demande de brevet européen 509 860 au nom de la demanderesse ou par soudure, brasure ou collage.

Dans une version préférée de l'invention, la plaque a une épaisseur comprise entre 3/10e et 5/10e de mm et est encastrée dans le fond suivant une profondeur comprise entre 0,5/10e et 1,5/10e de mm, pour un fond en aluminium d'épaisseur comprise entre 2,5 et 5 mm.

D'autres particularités et avantages de l'invention apparaîtront encore dans la description ci-après.

Aux dessins annexés donnés à titre d'exemples non limitatifs:
- la figure 1 est une vue en plan d'un disque destiné à être embouti sous la forme d'un récipient selon l'invention;
- la figure 2 est une vue en coupe du disque précité.

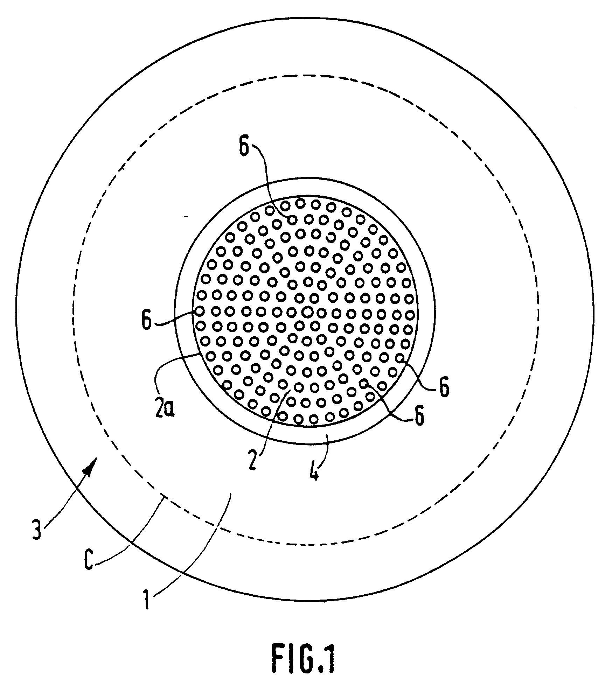

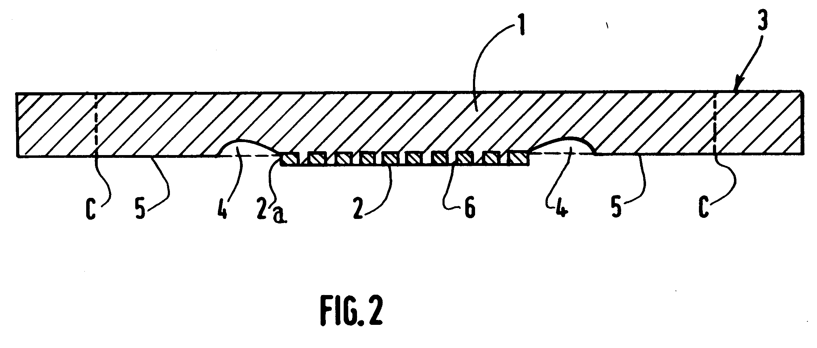

Sur les figures 1 et 2, on a représenté un disque découpé dans une feuille en métal ou alliage léger, tel que de l'aluminium. Ce disque est destiné à être embouti d'une manière bien connue par l'homme du métier, sous la forme d'un récipient de cuisson, tel qu'une poêle ou une casserole comportant un fond destiné à être disposé sur une plaque de cuisson ou un brûleur.

Sur la figure 1, on a délimité par un cercle en pointillé C la périphérie du fond 1 du récipient.

Comme également bien connu dans l'art, ce fond 1 est réalisé d'une manière légèrement concave lors de l'emboutissage du disque 3.

Conformément à l'invention, le fond 1 comporte dans sa partie centrale, une plaque 2 en métal ou alliage ayant des propriétés différentes du métal ou alliage du disque 3.

La plaque 2 est comme on le voit sur la figure 2 encastrée dans le métal du fond 1 et la périphérie 2a de cette plaque 2 est adjacente à une gorge 4 ménagée dans ledit fond 1.

Après emboutissage du disque 3, la concavité du fond 1 est telle que lorsqu'il est disposé sur une plaque de cuisson, la surface 5 du fond située autour de la plaque 2, touche la plaque de cuisson, tandis que celle de la plaque 2 ne touche pas cette dernière.

De préférence, le disque 3 est en aluminium d'épaisseur comprise entre 2,5 et 5 mm.

La plaque 2 est de préférence en acier inoxydable.

Cette plaque 2 recouvre de préférence entre 5 et 30% de la surface du fond 1. En effet, cette proportion réduite du recouvrement du fond 1 par la plaque 2 assure les meilleurs résultats, tant en ce qui concerne la résistance à la déformation du fond 1 sous l'effet de cycles répétés de chauffage et de refroidissement, qu'en ce qui concerne la transmission de la chaleur et la répartition de la température.

Ces résultats s'expliquent notamment par l'encastrement partiel de la plaque 2 dans la zone centrale du fond du récipient et par les propriétés différentes de l'acier par rapport à celle de l'aluminium qui empêche que la déformation du fond devienne irréversible sous l'effet de cycles répétés de chauffage et de refroidissement.

Dans la réalisation des figures 1 et 2, la plaque 2 présente des trous 6 par exemple circulaires, régulièrement espacés et répartis sur toute la surface de la plaque. Cette plaque 2 est partiellement encastrée dans le fond 1. Cette plaque 2 peut être encastrée au fond 1 par frappe à froid, comme décrit dans la demande de brevet européen 509 860 au nom de la demanderesse.

De cette façon, la plaque 2 est solidement liée au fond 1 du récipient en un grand nombre de points et maîtrise toute déformation de ce fond 1 grâce à l'acier utilisé pour cette plaque.

Il suffit que la plaque 2 ait une épaisseur comprise entre 3/10e et 5/10e de mm (pour un fond en aluminium d'épaisseur comprise entre 2,5 et 5 mm). Son encastrement dans le fond 1 suivant une profondeur comprise entre 0,5/10e et 1,5/10e de mm est suffisant pour obtenir d'excellents résultats. D'ailleurs, un encastrement trop important de la plaque 2 dans le métal du fond 1 s'avère nuisible.

Comme représenté sur la figure 1, la plaque 2 a la forme d'un disque. Toutefois, la plaque 2 pourrait avoir une forme polygonale, ou celle d'un anneau. La plaque 2 pourrait éventuellement être divisée en plusieurs secteurs ou être réalisée sous la forme d'un grillage.

La dimension des trous 6 de la plaque 2 n'est pas critique. Toutefois, il est préférable que les trous 6 de la plaque 2 aient un diamètre inférieur au double de l'intervalle entre deux trous.

A titre d'exemple, les trous 6 peuvent avoir un diamètre d'environ 3 mm et l'intervalle entre deux trous peut être d'environ 2 mm.

On donne ci-après les résultats d'essais comparatifs entre deux poêles, l'une étant classique et l'autre réalisée conformément à l'invention.

Les deux poêles étaient de dimensions identiques et réalisées à partir d'un disque en aluminium d'épaisseur égale à 3,4 mm.

La poêle conforme à l'invention présentait sur son fond un disque en acier inoxydable d'épaisseur égale à 0,5 mm et de diamètre égal à 75 mm.

Ces deux poêles ont subi des cycles répétés de chauffages et de refroidissements brusques (chauffage à 250°C puis refroidissement à l'eau du robinet à environ 20°C).

Une déformation irréversible du fond de la poêle classique a été constatée après 30 cycles ci-dessus.

Dans le cas de la poêle selon l'invention, une déformation irréversible du fond a été constatée seulement au bout de 300 cycles répétés de chauffages et de refroidissments.

Bien entendu l'invention n'est pas limitée aux exemples que l'on vient de décrire et on peut apporter à ceux-ci de nombreuses modifications sans sortir du cadre de l'invention.

Ainsi la plaque 2 peut avoir une forme quelconque et elle peut ne pas être centrée sur le fond du récipient.

Cette plaque peut être par exemple en forme d'étoile avec un nombre quelconque de branches. La forme de la plaque peut être dissymétrique et peut présenter par exemple une branche s'étendant dans une direction par exemple la direction de la queue du récipient.

## Revendications

1. Récipient de cuisson réalisé à partir d'une feuille (3) de métal ou d'alliage léger emboutie, comportant un fond (1) destiné à être disposé sur une plaque de cuisson, un brûleur ou analogue, ce fond (1) étant légèrement concave, caractérisé en ce que ledit fond (1) comporte une plaque (2) éventuellement composée de plusieurs éléments, centrée ne recouvrant qu'une portion réduite de ce dernier, en un métal ou alliage ayant des propriétés mécaniques, thermiques, physiques différentes de celles du métal ou alliage de ladite feuille (3), cette plaque (2) étant encastrée dans ledit fond (1).

2. Récipient de cuisson conforme à la revendication 1, caractérisé en ce qu'il est réalisé à partir d'une feuille (3) en aluminium et ladite plaque (2) est en acier.

3. Récipient de cuisson conforme à l'une des revendications 1 ou 2, caractérisé en ce que la concavité dudit fond (1) est telle que lorsqu'il est disposé sur une plaque de cuisson, la surface portante (5) du fond située autour de la plaque (2) ayant des propriétés différentes touche la plaque de cuisson, tandis que la plaque (2) précitée ne touche pas la plaque de cuisson.

4. Récipient de cuisson conforme à l'une des revendications 1 à 3, caractérisé en ce que ladite plaque (2) recouvre entre 5 et 30% de la surface du fond (1).

5. Récipient de cuisson conforme à l'une des revendications 1 à 4, caractérisé en ce que la plaque (2) présente des trous (6) et est partiellement encastrée dans le fond (1).

6. Récipient de cuisson conforme à l'une des revendications 1 à 5, caractérisé en ce que la plaque (2) a une épaisseur comprise entre 3/10e et 5/10e de mm et est encastrée dans le fond (1) suivant une profondeur comprise entre 0,5/10e et 1,5/10e de mm, pour un fond en aluminium d'épaisseur comprise entre 2,5 et 5 mm.

7. Récipient de cuisson conforme à l'une des revendications 1 à 6, caractérisé en ce que la plaque (2) est adjacente à une gorge (4) ménagée dans le fond (1).

8. Récipient de cuisson conforme à l'une des revendications 1 à 7, caractérisé en ce que la plaque (2) est en forme de disque ou d'anneau éventuellement divisé en plusieurs secteurs.

9. Récipient de cuisson conforme à l'une des revendications 1 à 7, caractérisé en ce que la plaque (2) est centrée sur le fond du récipient.

10. Récipient de cuisson conforme à l'une des revendications 1 à 7, caractérisé en ce que la plaque (2) n'est pas centrée sur le fond du récipient.

11. Récipient de cuisson conforme à l'une des revendications 5 à 8, caractérisé en ce que les trous (6) de la plaque (2) ont une dimension inférieur au double de l'intervalle entre deux trous.

12. Récipient de cuisson conforme à la revendication 11, caractérisé en ce que les trous (6) ont un diamètre d'environ 3 mm et l'intervalle entre deux trous (6) est d'environ 2 mm.

## Claims

1. A cooking vessel made from a pressed sheet (3) of metal or light alloy, comprising a base (1) intended to be placed on a hotplate, a burner or the like, said base (1) being slightly concave, characterised in that the said base (1) comprises a centred plate (2), which may possibly comprise a plurality of elements and which covers only a reduced portion of the base, of a metal or alloy which has mechanical, thermal, and physical properties different from those of the metal or alloy of the said sheet (3), said plate (2) being embedded in the said base (1).

2. A cooking vessel according to claim 1, characterised in that it is made from a sheet (3) of aluminium and the said plate (2) is of steel.

3. A cooking vessel according to claim 1 or 2, characterised in that the concavity of the base (1) is such that when it is placed on a hotplate, the bearing surface (5) of the base situated around the plate (2), which has different properties, touches the hotplate, while the said plate (2) does not touch the hotplate.

4. A cooking vessel according to any one of claims 1 to 3, characterised in that the said plate (2) covers between 5 and 30% of the surface of the base (1).

5. A cooking vessel according to any one of claims 1 to 4, characterised in that the plate (2) has holes (6) and is partially embedded in the base (1).

6. A cooking vessel according to any one of claims 1 to 5, characterised in that the plate (2) has a thickness of between 3/10^{th} and 5/10^{th} of a millimetre and is embedded in the base (1) to a depth of between 0.5/10^{th} and 1.5/10^{th} of a millimetre, for an aluminium base of a thickness of between 2.5 and 5 mm.

7. A cooking vessel according to any one of claims 1 to 6, characterised in that the plate (2) is adjacent a groove (4) formed in the base (1).

8. A cooking vessel according to any one of claims 1 to 7, characterised in that the plate (2) is in the form of a disc or a ring possibly divided into a plurality of sectors.

9. A cooking vessel according to any one of claims 1 to 7, characterised in that the plate (2) is centred on the base of the vessel.

10. A cooking vessel according to any one of claims 1 to 7, characterised in that the plate (2) is not centred on the base of the vessel.

11. A cooking vessel according to any one of claims 5 to 8, characterised in that the holes (6) in the plate (2) have a dimension less than twice the spacing between two holes.

12. A cooking vessel according to claim 11, characterised in that the holes (6) have a diameter of about 3 mm and the space between two holes (6) is about 2 mm.

## Patentansprüche

1. Kochgefäß aus einem tiefgezogenen Blech (3) aus Metall oder einer Leichtmetallegierung mit einem Boden (1), der dazu bestimmt ist, auf eine Kochplatte, einen Brenner oder ähnliches gestellt zu werden, wobei dieser Boden (1) leicht konkav ist, dadurch gekennzeichnet, daß der Boden (1) eine zentrierte, gegebenenfalls aus mehreren Elementen zusammengesetzte Platte aufweist, die nur einen beschränkten Teil des Bodens (1) bedeckt und die aus einem Metall oder einer Legierung mit mechanischen, thermischen und physikalischen Eigenschaften besteht, die sich von denen des Metalls oder der Legierung des Blechs (3) unterscheiden, wobei diese Platte (2) in den Boden (1) eingelassen ist.

2. Kochgefäß nach Anspruch 1, dadurch gekennzeichnet, daß es aus einem Blech aus Aluminium hergestellt ist und daß die Platte (2) aus Stahl ist.

3. Kochgefäß nach einem der Ansprüche 1 oder 2, dadurch gekennzeichnet, daß die Konkavität des Bodens (1) derart ist, daß, wenn er auf eine Kochplatte gestellt wird, die die Platte (2) mit den verschiedenen Eigenschaften umgebende Auflagefläche (5) die Kochplatte berührt, während die Platte (2) die Kochplatte nicht berührt.

4. Kochgefäß nach einem der Ansprüche 1 bis 3, dadurch gekennzeichnet, daß die Platte (2) zwischen 5 und 30 % der Fläche des Bodens (1) bedeckt.

5. Kochgefäß nach einem der Ansprüche 1 bis 4, dadurch gekennzeichnet, daß die Platte Löcher (6) aufweist und teilweise in den Boden (1) eingelassen ist.

6. Kochgefäß nach einem der Ansprüche 1 bis 5, dadurch gekennzeichnet, daß die Platte (2) eine Dicke zwischen 3/10 und 5/10 mm aufweist und bei einem Boden aus Aluminium mit einer Dicke zwischen 2,5 und 5 mm über eine Tiefe von 0,5/10 bis 1,5/10 mm in den Boden (1) eingelassen ist.

7. Kochgefäß nach einem der Ansprüche 1 bis 6, dadurch gekennzeichnet, daß die Platte (2) an eine in dem Boden (1) ausgesparte Rille (4) angrenzt.

8. Kochgefäß nach einem der Ansprüche 1 bis 7, dadurch gekennzeichnet, daß die Platte (2) die Form einer Scheibe oder eines gegebenenfalls in mehrere Abschnitte unterteilten Rings hat.

9. Kochgefäß nach einem der Ansprüche 1 bis 7, dadurch gekennzeichnet, daß die Platte (2) auf dem Boden des Gefäßes zentriert ist.

10. Kochgefäß nach einem der Ansprüche 1 bis 7, dadurch gekennzeichnet, daß die Platte (2) nicht auf dem Boden des Gefäßes zentriert ist.

11. Kochgefäß nach einem der Ansprüche 5 bis 8, dadurch gekennzeichnet, daß die Löcher (6) der Platte (2) eine Größe aufweisen, die kleiner ist als der doppelte Abstand zwischen zwei Löchern.

12. Kochgefäß nach Anspruch 11, dadurch gekennzeichnet, daß die Löcher (6) einen Durchmesser von etwa 3 mm haben und daß der Abstand zwischen zwei Löchern (6) ungefähr 2 mm beträgt.
